# EUROPÄISCHE PATENTANMELDUNG

(11) **EP 2 163 318 A2**
(43) Veröffentlichungstag der Anmeldung: **17.03.2010**
(21) Anmeldenummer: 09169630.2
(22) Anmeldetag: 07.09.2009
(51) Int. Cl.: B09B 3/00, C05F 17/02, C12M 1/107

(54) **Verfahren zur Volumen- und Massenreduktion von Hausmüll**

(30) Priorität: 16.09.2008 DE 102008047411
(71) Anmelder: Bekon Energy Technologies GmbH & Co.Kg, 85774 Unterföhring (DE)
(72) Erfinder: Lutz, Peter, 81927, München (DE)
(74) Vertreter: Winter, Brandl, Fürniss, Hübner Röss, Kaiser, Polte Partnerschaft Patent- und Rechtsanwaltskanzlei

(57) **Zusammenfassung**

Die Es wird ein Verfahren zur Volumen- und Massenreduktion von Hausmüll angegeben. Durch die Erfindung wird die Erzeugung von Biogas und die anschließende Kompostierung und Trocknung der verbrauchten organischen Fraktion des Hausmülls miteinander kombiniert. Hierbei wird der Hausmüll nach der Erzeugung von Biogas in einen Aerobisierungsbehälter ungesetzt. Auf diese Weise kann der Fermenter für die Erzeugung von Biogas für die Erzeugung von Biogas optimiert werden, während der Aerobisierungsbheälter für die Kompostierung und anschließende Trocknung der verbleibenden organischen Fraktion optimiert werden kann. Durch diese Auftrennung von Biogaserzeugung und anschließender Aerobisierung bzw. Kompostierung kann das vorliegende Verfahren auch in bestehende Biogasanlagen nach dem Prinzip der Trockenfermentation integriert werden. Durch die Dreifach-Behandlung der organischen Fraktion des Hausmülls mittels Trockenfermentation, anschließender Kompostierung und nachfolgender Trocknung des fertigen Komposts erfolgt eine dreifache Volumen-und Massenreduktion des Hausmülls.

## Beschreibung

Die Erfindung betrifft ein Verfahren zur Volumen- und Massenreduktion von Hausmüll gemäß Anspruch 1.

Die so genannte "Trockenfermentation" erlaubt es, schüttfähige Biomassen aus der Landwirtschaft, aus Bioabfällen und kommunalen Pflegeflächen zu methanisieren, ohne die Materialien in ein pumpfähiges, flüssiges Substrat zu überführen. Es können Biomassen mit bis zu 50% Trockensubstanzanteil vergoren werden. Dieses Trockenfermentationsverfahren ist beispielsweise in der EP 0 934 998 B1 beschrieben.

Bei der "trockenen" Vergärung wird das zu vergärende Material nicht in eine flüssige Phase eingerührt, wie das zum Beispiel bei der Flüssigvergärung von Bioabfällen der Fall ist. Stattdessen wird das in den Fermenter eingebrachte Gärsubstrat ständig feucht gehalten, indem das Perkolat am Fermenterboden abgezogen und über der Biomasse wieder versprüht wird. So werden optimale Lebensbedingungen für die Bakterien erreicht. Bei der Rezirkulation des Perkolats kann zusätzlich die Temperatur reguliert werden, und es besteht die Möglichkeit, Zusatzstoffe für eine Prozessoptimierung zuzugeben.

Aus der WO 02/06439 ist ein Bioreaktor bzw. Fermenter in Form einer Fertiggarage bekannt, der nach dem Prinzip der Trockenfermentation im so genannten Batch-Verfahren betrieben wird. Hierbei wird nach einer Animpfung mit bereits vergorenem Material das Gärsubstrat mit Radladern in den Fermenter gefüllt. Der garagenförmig aufgebaute Gärbehälter wird mit einem gasdichten Tor verschlossen. Die Biomasse in Form von Gartenabfällen oder nachwachsenden Rohstoffen wird unter Luftabschluss vergoren, dabei erfolgt keine weitere Durchmischung und es wird kein zusätzliches Material zugeführt. Das aus dem Gärgut sickernde Perkolat wird über eine Drainagerinne abgezogen, in einem Tank zwischengespeichert und zur Befeuchtung wieder über dem Gärsubstrat versprüht. Der Gärprozess findet im mesophilen Temperaturbereich bei 34-37°C statt, die Temperierung erfolgt mittels einer Boden- und Wandheizung.

Das entstehende Biogas wird üblicherweise in einem Blockheizkraftwerk (BHKW) zur Gewinnung von Strom und Wärme genutzt werden. Damit immer genug Biogas für das Blockheizkraftwerk zur Verfügung steht, werden in der Trockenfermentationsanlage mehrere Gärbehälter zeitlich versetzt betrieben. Am Ende der Verweilzeit wird der Fermenterraum vollständig entleert und dann neu befüllt. Das vergorene Substrat wird anschließend einer Kompostierung zugeführt, so dass ein konventionellen Komposten vergleichbarer organischer Dünger entsteht.

Hausmüll besteht zu ca. 50% aus organischen Bestandteilen. Die Entsorgung von Hausmüll erfolgt entweder durch unmittelbare Deponierung, durch Verbrennung in einer Müllverbrennungsanlage oder durch Abtrennung der organischen Fraktion und deren biologischer Aufbereitung. Innerhalb der biologischen Aufbereitung der organischen Fraktion unterscheidet man zwischen:
- Kompostierung mit dem Ziel eines möglichst weitgehenden Abbaus der organischen Fraktion (biologische Selektion) sowie Trocknung des Materials während der Endrotte und weiterer Auftrennung des verbleibenden Stoffstromes in deponierbare und weiter verwertbare Stoffströme. Dieser Prozess verbraucht Energie.
- Biogener Trocknung des Materials zur weitergehenden Stoffstromtrennung und thermischen Verwertung der nun lagerfähigen getrockneten organischen Fraktion zusammen mit den noch darin enthaltenen Störstoffen. Dieser Prozess benötigt ebenfalls Energie enthält aber im Gegensatz zur Kompostierung noch einen Großteil der nativen Organik.
- Vergärung, Entwässerung und Trocknung bzw. trocknender Nachrotte der organikreichen Fraktion, Auftrennung der verbleibenden Stoffströme in deponierbare inerte und zur thermischen Verwertung geeignete (Leichtfraktion). Diese Verfahrensvariante ist energieautark und liefert darüber hinaus Überschussenergie in Form von Biogas.

Aus der DE 38 35 230 C2 ist ein Verfahren zur Energiegewinnung durch Müllentgasung und eine Müllentgasungsanlage hierzu bekannt. Um die Menge des in einer Müllverbrennungsanlage zu verbrennenden Mülls zu verringern wird gemäß diesem Verfahren die organische Fraktion aus Hausmüll zunächst abgetrennt und in einem Naßgärverfahren zur Erzeugung von Biogas herangezogen. Anschließend werden die entgasten Müllanteile entwässert und getrocknet. Durch dieses Verfahren wird die Menge des zu verbrennenden Mülls reduziert.

Aus der DE 198 33 624 A1 ist ein Verfahren und ein entsprechender Müllbehälter (Bio-Select-Percolator) bekannt, bei dem der Hausmüll bzw. die organische Fraktion in ein und demselben Behälter verbleiben kann und die verschiedenen Möglichkeiten der biologischen Aufbereitung ausgeführt werden können. Ein vergleichbares Verfahren ist auch aus der DE 101 25 408 A1 bekannt.

Ausgehend von der DE 198 33 624 A1 ist es Aufgabe der vorliegenden Erfindung ein verbessertes Verfahren zur Volumen- und Massenreduktion von Hausmüll anzugeben.

Die Lösung dieser Aufgabe erfolgt durch die Merkmale des Anspruchs 1.

Durch die Erfindung wird die Erzeugung von Biogas und die anschließende Kompostierung und Trocknung der verbrauchten organischen Fraktion des Hausmülls miteinander kombiniert. Hierbei wird im Gegensatz zu dem aus der DE 198 33 624 A1 bekannten Verfahren der Hausmüll nach der Erzeugung von Biogas in einen Aerobisierungsbehälter ungesetzt. Auf diese Weise kann der Fermenter für die Erzeugung von Biogas für die Erzeugung von Biogas optimiert werden, während der Aerobisierungsbheälter für die Kompostierung und anschließende Trocknung der verbleibenden organischen Fraktion optimiert werden kann. Durch diese Auftrennung von Biogaserzeugung und anschließender Aerobisierung bzw. Kompostierung kann das vorliegende Verfahren auch in bestehende Biogasanlagen nach dem Prinzip der Trockenfermentation integriert werden. Durch die Luftzufuhr nach dem Umsetzen des Gärrestes in den Aerobisierungsbehälter wird der vergleichsweise feuchte Gärrest getrocknet, so dass die ohne weitere Vorbehandlung des Gärrests die Kompostierung einsetzt. Durch die Dreifach-Behandlung der organischen Fraktion des Hausmülls mittels Trockenfermentation, anschließender Kompostierung und nachfolgender Trocknung des fertigen Komposts erfolgt eine dreifache Volumen- und Massenreduktion des Hausmülls.

Durch die vorteilhafte Ausgestaltung der Erfindung nach Anspruch 2 wird der nach der Trockenfermentation verbleibenden, vergleichsweise feuchten organischen Fraktion schneller Flüssigkeit entzogen, so dass die verbleibende organischen Fraktion schneller kompostiert werden kann.

Durch die bevorzugte Ausführungsform der Erfindung nach Anspruch 3 wird die Trocknung d es fertigen Komposts beschleunigt.

Durch die bevorzugte Ausführungsform der Erfindung nach Anspruch 4 erfolgt die Vorwärmung der Luft für die Beschleunigung der Kompostierung und/oder der Trocknung des Komposts durch die Abwärme aus einem BHKW. Durch die Nutzung von Abwärme aus dem BHKW ergibt sich ein besonders energieeffizientes Verfahren.

Durch die vorteilhafte Ausgestaltung der Erfindung nach Anspruch 6 wird die verbleibende, nicht-organische Hausmüllfraktion durch Luft getrocknet wodurch zusätzlich eine Volumen- und Massenreduktion auftritt. Hierdurch erfolgte eine vierte Volumen- und Massenreduktion.

Gemäß der vorteilhaften Ausgestaltung der Erfindung nach Anspruch 7 wird die Luft zur Trocknung der verbleibenden Hausmüllfraktion ebenfalls vorgewärmt.

Nach der Ausgestaltung nach Anspruch 8 wird zur Vorwärmung der Luft ebenfalls Abwärme aus dem BHKW genutzt. Hierdurch ergibt sich ein besonders energieeffizientes Verfahren.

Durch die vorteilhafte Ausgestaltung der Erfindung nach Anspruch 5 bzw. 9 wird die Luft zur Trocknung bzw. Kompostierung gesammelt und in einem Biofilter gereinigt und erst dann der Atmosphäre zugeführt. Hierdurch wird der Eintrag von Schadstoffen in die Atmosphäre verringert.

Nachfolgend wird ein beispielhafter Verfahrensablauf beschrieben. Zunächst wird in einem ersten Schritt der Hausmüll zerkleinert und die organische Fraktion wird durch Sieben abgetrennt. Die abgetrennte organische Fraktion des Hausmülls wird dann in einer Biogasanlage nach dem Prinzip der Trockenfermentation zur Erzeugung von Biogas genutzt. Hierzu eignet sich insbesondere eine Biogasanlage wie sie aus der EP 1301583 B1 bekannt ist. Dies stellt die erste Stufe der Volumen- und Massenreduzierung des Hausmülls dar.

Nach der Erzeugung von Biogas wird der Vergärungsrest in einen Aerobisierungsbehälter umgesetzt und durch Luftzufuhr aerobisiert und dadurch kompostiert. Die zugeführte Luft wird von unten in den Vergärungsrest eingeblasen. Durch das Einblasen von Luft wird der vergleichsweise feucht Vergärungsrest getrocknet, so dass der Vergärungsrest ohne weitere Vorbehandlung kompostiert werden kann. Diese Aerobisierung und Kompostierung stellt die zweite Stufe der Volumen- und Massenreduzierung des Hausmülls dar.

Nach Abschluss der Kompostierung wird die Luftzufuhr aufrecht erhalten und der Kompost bzw. die kompostierte organische Fraktion wird durch das Einblasen von Luft getrocknet. Dies stellt die dritte Stufe der Volumen- und Massenreduzierung des Hausmülls dar.

Die während der Aerobisierung bzw. Kompostierung zugeführte Luft wird durch Abwärme aus einem BHKW (Blockheizkraftwerk) vorgewärmt. Durch diese Vorwärmung kann der bei der Trockenfermentation entstehende Gärrest - nach der Fermentation verbleibende organische Fraktion - mit hoher Restfeuchte schneller der Kompostierung zugeführt werden, da der feuchte Gärrest durch die vorgewärmte Luft schneller getrocknet wird. Auch die Luft zur Trocknung des fertigen Komposts wird durch Abwärme aus dem BHKW vorgewärmt. Hierdurch wird die Trocknung des Komposts beschleunigt.

Auch die nicht-organische Fraktion wird mit vorgewärmter Luft aus dem BHKW getrocknet, was eine vierte Stufe der Massen- und Volumenreduktion des Hausmülls darstellt.

Durch die Trocknung sowohl der kompostierten organischen Fraktion als auch der nicht-organischen Fraktion wird eine hohe chemische und physikalische Stabilität des Restmülls erreicht, so dass dieser in Deponien eingelagert werden kann. Die getrocknete und kompostierte organische Fraktion kann sogar als Deponieabdeckung verwendet werden.

## Patentansprüche

1. Verfahren zur Volumen- und Massenreduktion von Hausmüll mit folgenden Verfahrensschritten:
a) Zerkleinern des Hausmülls,
b) Abtrennen der organischen Fraktion des Hausmülls,
c) Erzeugung von Biogas aus der abgetrennten organischen Fraktion durch anerobe Vergärung nach dem Prinzip der Trockenfermentation in einer Biogasanlage,
d) Umsetzen der der organischen Fraktion aus der Biogasanlage in einen Anerobisierungsbehälter,
e) Anerobisierung und Kompostierung der organischen Fraktion durch Zufuhr von Luft, und
f) Trocknung der kompostierten organischen Fraktion durch Einblasen von Luft.

2. Verfahren nach Anspruch 1, **dadurch gekennzeichnet, dass** die in Schritt e) zugeführte Luft vorgewärmt wird.

3. Verfahren nach Anspruch 1 oder 2, **dadurch gekennzeichnet, dass** die in Schritt f) eingeblasene Luft vorgewärmt wird.

4. Verfahren nach Anspruch 2 oder 3, **dadurch gekennzeichnet, dass** das in Schritt c) erzeugte Biogas einem BHKW zugeführt wird, und dass die Vorwärmung der Luft in Schritt e) und/oder f) mittels Abwärme aus dem BHKW erfolgt.

5. Verfahren nach einem der vorhergehenden Ansprüche **dadurch gekennzeichnet, dass** die in Schritt f) zur Trocknung des Komposts eingeblasene Luft gesammelt und vor Abgabe an die Atmosphäre in einem Biofilter gereinigt wird.

6. Verfahren nach einem der vorhergehenden Ansprüche **dadurch gekennzeichnet, dass** die nach Abtrennung der organischen Fraktion in Schritt b) verbleibende Hausmüllfraktion mittels Luft getrocknet wird.

7. Verfahren nach Anspruch 6, **dadurch gekennzeichnet, dass** die Luft zur Trocknung der verbleibenden Hausmüllfraktion vorgewärmt wird.

8. Verfahren nach Anspruch 7, **dadurch gekennzeichnet, dass** die Vorwärmung der Luft zur Trocknung der verbleibenden Hausmüllfraktion mittels Abwärme aus dem BHKW erfolgt.

9. Verfahren nach einem der Ansprüche 6 bis 8 **dadurch gekennzeichnet, dass** die Luft zur Trocknung der verbleibenden Hausmüllfraktion gesammelt und vor Abgabe an die Atmosphäre in einem Biofilter gereinigt wird.
